# EUROPÄISCHE PATENTSCHRIFT

(11) **EP 3 956 084 B1**
(45) Veröffentlichungstag und Bekanntmachung des Hinweises auf die Patenterteilung: **27.11.2024**
(21) Anmeldenummer: 20712534.5
(22) Anmeldetag: 18.03.2020
(51) Int. Cl.: B21J 15/32, B23K 9/20, B23P 19/00, B25B 23/10, B25C 1/18, B21J 15/02

(54) **SETZKOPF, BLECHPRESSE ODER SETZGERÄT MIT DIESEM SETZKOPF SOWIE EIN FÜGEVERFAHREN EINES FÜGEELEMENTS MIT DEM SETZKOPF**
SETTING HEAD, SHEET METAL PRESS OR SETTING DEVICE HAVING THIS SETTING HEAD, AND A METHOD FOR JOINING A JOINING ELEMENT WITH THE SETTING HEAD
TÊTE DE POSE, PRESSE POUR TÔLE OU DISPOSITIF DE POSE POURVU DE CETTE TÊTE DE POSE ET PROCÉDÉ D'ASSEMBLAGE D'UN ÉLÉMENT D'ASSEMBLAGE AVEC LADITE TÊTE DE POSE

(30) Priorität: 16.04.2019 DE 102019110011
(43) Veröffentlichungstag der Anmeldung: 23.02.2022
(73) Patentinhaber: Böllhoff Verbindungstechnik GmbH, 33649 Bielefeld (DE)
(72) Erfinder: OLEFF, Nils, 32257 Bünde (DE); HAESLER, Bernd, 33790 Halle (DE); SCHRÖDER, Dennis, 32052 Herford (DE)
(74) Vertreter: HWP Intellectual Property
(86) Internationale Anmeldenummer: PCT/EP2020/057375
(87) Internationale Veröffentlichungsnummer: WO 2020/212055

(56) Entgegenhaltungen:
- EP-A1- 1 350 583
- EP-B1- 1 350 583
- DE-A1- 2 200 128
- DE-A1- 3 718 405
- DE-T2- 69 212 642
- GB-A- 825 223

## Beschreibung

### 1. Gebiet der Erfindung

Die vorliegende Erfindung betrifft einen Setzkopf für eine Fügevorrichtung, insbesondere eine Presse oder ein Setzgerät, mit dem ein Fügeelement, wie beispielsweise ein Schweißhilfsfügeteil, ein Stanzniet oder ein Bolzen, in zumindest ein Bauteil fügbar ist. Des Weiteren betrifft vorliegende Erfindung eine Blechpresse oder ein Setzgerät in Kombination mit diesem Setzkopf. Abschließend offenbart vorliegende Erfindung ein Fügeverfahren eines Fügeelements, insbesondere ein Schweißhilfsfügeteil, mit diesem Setzkopf.

### 2. Hintergrund der Erfindung

Im Stand der Technik werden unterschiedliche Fügevorrichtungen mit Setzkopf verwendet. Diese dienen dem Einbringen eines Fügeelements. Ein entsprechendes Beispiel ist ein Stanznietsetzgerät zum Setzen eines Stanzniets, beispielsweise in einen Stapel von zwei Blechbauteilen. Des Weiteren finden derartige Setzköpfe Anwendung beim Clinchen oder beim Setzen oder Einschießen von Fügeelementen zur Herstellung eines Bauteilverbunds.

Nimmt man beispielgebend Bezug auf ein Stanznietsetzgerät, bewegt sich der hydraulisch oder pneumatisch oder elektrisch angetriebene Stempel durch einen Fügekanal, um einen Stanzniet zu setzen. Vor dem Beginn des Setzvorgangs wird häufig pneumatisch der Stanzniet unter die Stempelfläche des Stempels im Fügekanal zugeschossen. Aus dieser Position, wo der Stanzniet beispielsweise durch eine Bremsstrecke oder anderweitig gehalten wird, schiebt die Arbeitsfläche des Stempels den Stanzniet in Fügerichtung durch den Fügekanal vor sich her und presst ihn abschließend in die Bauteile ein.

Um die Fügeelemente lagerichtig in die Bauteile setzen zu können, müssen sie passend im Fügekanal des Setzkopfes orientiert angeordnet sein. Zudem ist es erforderlich, dass während der Bewegung des Stempels in Fügerichtung, also während des Setzvorgangs, die Orientierung des Fügeelements aufrechterhalten bleibt, damit eine verlässliche Fügeverbindung hergestellt werden kann. Denn sobald sich das Fügeelement im Fügekanal dreht bzw. umorientiert, kann neben einer schlechten Fügeverbindung auch der Setzkopf, der Fügekanal oder die Stempelfläche des Stempels beschädigt werden. Dies führt neben einem Ausschussteil auch zu möglichen Stillstandszeiten der Fügevorrichtung, um den Setzkopf zu warten.

Um derartige Situationen zu vermeiden, offenbart WO 93/19890 eine Haltevorrichtung zum Halten, Führen und selbsttätigen Freigeben von Füge- und Hilfsfügeteilen, wie zum Beispiel Muttern, Bolzen, Nieten, in einer Einrichtung zum Einpressen bzw. Befestigen der Fügeteile an einem Blech. Dabei besteht das Hauptziel dieser Vorrichtung darin, eine durch die Zufuhr des Fügeelements definierte Position bis zum tatsächlichen Einpressen des Elements in ein Bauteil zu erhalten. Zu diesem Zweck sind an dem im Fügekanal des Setzkopfes bewegten Stempel zwei Halteklauen schwenkbar angelenkt. Auf diese Weise können sich die Halteklauen zwischen einer Schließposition, in der sie das Fügeelement am Stempel halten, und einer Öffnungsposition, in der sie das Fügeelement aus der Schließposition freigegeben, verschwenken. Eine Zwangsführung der Halteklauen sorgt dafür, dass an einer bestimmten Position des Stempels die Halteklauen definiert verschwenkt werden, um von der Schließposition in die Öffnungsposition zu wechseln. Diese Zwangsführung entsteht durch eine bestimmte Form der Innenwand des Fügekanals sowie eine bestimmte Form der an die Innenwand angrenzenden Außenseite der Halteklauen. Da die Halteklauen am Stempel befestigt sind, werden sie permanent mit dem Stempel mitbewegt. Entsprechend findet eine permanente Reibung zwischen der Stempelkonstruktion mit Halteklauen und der Innenwand des Fügekanals statt. Die während des Setzens wirkenden Kräfte, die ebenfalls für das Öffnen und Schließen der Halteklauen sorgen, haben ebenfalls eine kritische Abnutzung zur Folge. Dies führt dazu, dass das Fügeelement je nach Grad der Abnutzung unkontrolliert aus der Schließposition verloren geht, was zu einer schlechten Fügestelle und/oder zu einer Beschädigung des Stempels und des Setzkopfes führt.

Eine ähnliche Konstruktion ist in EP 0 755 749 B2 beschrieben. Hier ist ebenfalls der Stempel eines Pressensetzkopfes in einem feststehenden Fügekanal des Setzkopfes geführt. Der Fügekanal hat genauso wie der Stempel einen viereckigen Querschnitt. An zwei gegenüberliegenden Innenseiten sind in entsprechenden Freimachungen axial mit dem Stempel versetzbare Haltefinger vorgesehen. Diese Haltefinger sind formschlüssig in ihrer axialen Bewegung relativ zum Stempel begrenzt, da sie gleichzeitig in gegenläufigen Freimachungen an der Außenseite des Stempels und an der Innenseite des Fügekanals eingreifen. Das Fügeelement wird seitlich in den Fügekanal und entfernt von der Stempelaustrittsöffnung zugeführt. Dort wird das Fügeelement über lateral in den Haltefingern versetzbar angeordneten Kugeln oder Stege einerseits und die Stempelfläche andererseits gehalten.

Nachteilig kann der Stempel das Fügeelement nur von den Haltefingern lösen, wenn die blockierenden Kugeln oder Stege durch eine weitere Freimachung an der Innenseite des Fügekanals freigegeben werden. Gerade Toleranzen in der Höhe des Fügeelements können zu zusätzlichen Reibungskräften und Abnutzungen zwischen den Haltefingern und dem Fügekanal führen. Zudem wird das Fügeelement in Entfernung zum Bauteil aus den Haltefingern gelöst. Entsprechend kann es unter der Stempelfläche verkippen oder allgemein seine Lage umorientieren, was eine mangelhafte Fügeverbindung zur Folge hat. Des Weiteren zeigt sich auch hier der Nachteil, dass der Stempel in Kombination mit den Haltefingern unter permanenter Reibung mit der Innenfläche des Fügekanals innerhalb des Fügekanals bewegt wird. Dies führt zu Abnutzungen, Verschmutzungen im Fügekanal und zur Ausbildung von Toleranzen in der Bewegungsfreiheit der Haltefinger. Entsprechend ist ein hoher Wartungsaufwand mit dieser Konstruktion verbunden. Zudem erhöht sich die Gefahr von mangelnder Positionierfähigkeit der Fügeelemente sowie nicht verlässlichem Halt des Fügeelements im Vorfeld der Herstellung einer Fügeverbindung. Der mangelhafte Halt des Fügeelements garantiert gerade nicht die erforderliche Verliersicherheit gerade im Betrieb eines Setzkopfes in Kombination mit einer Presse. Die Verliersicherheit hat aufgrund der wirkenden hohen Arbeitskräfte einer Presse im zwei bis dreistelligen Tonnenbereich eine besondere Bedeutung. Denn ein verlorenes Fügeelement oder ein fehlpositioniertes Fügeelement zieht häufig starke Schäden an der Presse sowie empfindliche wartungsintensive Stillstandszeiten einer Presse oder einer Verarbeitungsstraße mit mehreren Pressen nach sich.

Verbesserungen bezüglich eines Zufuhrmechanismus für Gegenstände sind in GB 825 223 A , welche die Basis für den Oberbegriff des Anspruchs 1 bildet, beschrieben Hierin werden Muttern zu einem angetriebenen Werkzeug zugeführt. Die Muttern werden vom Trichter in die Aussparung zur Verwendung durch das pneumatische Schraubwerkzeug zugeführt, wobei die Muttern durch die Vorrichtung bewegt werden und von der oberen Rutsche in kantenvorderster Position in die untere Rutsche, die eine Teleskopbeziehung zur oberen Rutsche aufweist, fallen, wo sie einzeln durch den Hebel gemäß dem Bedarf des Werkzeugs freigegeben werden. Das Werkzeug mit dem Antriebs-Einsatz wird vom Bediener auf eine Mutter in Position gedrückt und diese Abwärtsbewegung des Werkzeugs bewirkt nacheinander vier Dinge: Erstens greift es mittels einer Schale in die Rolle des Hebels ein, um das Ende davon zu verschieben, um den Weg für den Einsatz freizugeben. Zweitens greift es in die Rolle des Hebels ein, damit der Stapel an Muttern in die untere Rutsche fällt, bis er von der Spitze des Hebels gehalten wird. Drittens greift es in die Rollen der Hebel ein, um deren Enden unter der positionierten Mutter herauszuziehen. Viertens, nachdem die Mutter bereits eingerastet ist, treibt der Einsatz sie ein. Wenn der nach unten gerichtete Druck auf das Werkzeug nachlässt, gibt die nachfolgende Bewegung des Hebels die nächste Mutter frei, die fällt und durch die Enden der Hebel positioniert wird, die bereit für den nächsten Arbeitszyklus in ihre ursprünglichen Positionen zurückkehren.

Es ist somit Aufgabe vorliegender Erfindung, einen alternativen Setzkopf für eine Presse oder eine Fügevorrichtung vorzuschlagen, der eine verlässliche Zufuhr eines Fügeelements und einen nachfolgenden Fügevorgang ohne die oben genannten Nachteile sicherstellt.

### 3. Zusammenfassung der Erfindung

Die obige Aufgabe wird durch einen Setzkopf für eine Fügevorrichtungen, insbesondere eine Presse oder ein Setzgerät, gemäß dem unabhängigen Patentanspruch 1, durch eine Blechpresse oder ein Setzgerät mit diesem Setzkopf gemäß den unabhängigen Patentansprüchen 7 und 8 sowie durch ein Fügeverfahren eines Fügeelements, insbesondere ein Schweißhilfsfügeteil, mit diesem Setzkopf gemäß dem unabhängigen Patentanspruch 9 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Der erfindungsgemäße Setzkopf für eine Fügevorrichtung weist die folgenden Merkmale auf: einen in Längsrichtung bewegbaren Stempel, sodass über eine an einem Arbeitsende des Stempels angeordnete Stempelfläche ein Fügeelement in ein Bauteil fügbar ist, eine Aufnahmehülse, die bevorzugt eine hohlzylinderförmige Ausgestaltung oder eine blockähnliche Form mit Innenkanal besitzt, mit einem Durchgangskanal, die mit dem Stempel in dem Durchgangskanal benachbart zu dem Arbeitsende des Stempels konzentrisch und axial bewegbar auf diesem geführt ist, und zwei einander gegenüberliegend und außerhalb des Durchgangskanals an der Aufnahmehülse angeordnete Haltearme stellen jeweils mindestens ein lateral einwärts ragendes Halteende bereit, sodass mit den mindestens zwei Halteenden das Fügeelement benachbart zu einer stempelabgewandten Austrittsöffnung des Durchgangskanals und durch das axial bewegbare Arbeitsende des Stempels lösbar positionierbar ist.

Der erfindungsgemäße Setzkopf zeichnet sich durch eine Kombination des bewegbaren Stempels mit einer Aufnahmehülse aus. Die Aufnahmehülse hat eine hohlzylinderförmige Gestalt, so dass sie den Stempel in einem Durchgangskanal aufnehmen kann. Hohlzylinderförmig bezeichnet in diesem Zusammenhang das Vorhandensein eines inneren Kanals und einer möglichst parallel dazu, zumindest in Abschnitten, verlaufenden Außenseite. Der innere Kanal, oder auch Durchgangskanal genannt, ist bevorzugt mit einem runden oder einem unrunden Querschnitt vorgesehen. In ihm wird ein Stempel (siehe unten) komplementärer Form geführt.

Innerhalb des Durchgangskanals ist der Stempel weitestgehend frei axial bewegbar. Lediglich eine formschlüssige Verbindung zwischen Aufnahmehülse und Stempel stellt sicher, dass die relative Bewegbarkeit von Stempel und Aufnahmehülse mit Bezug zueinander auf eine bestimmte Distanz oder Länge begrenzt ist. Dieser begrenzte relative Verstellweg zwischen Aufnahmehülse und Stempel gewährleistet einerseits die Einnahme einer Ruheposition des Stempels für die Zufuhr eines neu zu setzenden Fügeelements. Zudem gewährleistet diese begrenzte Relativverschiebung ein Erreichen einer Arbeitsposition des Stempels im Verhältnis zur Aufnahmehülse, sodass ein Fügeelement verlässlich gesetzt werden kann.

Neben der Aufnahme des Stempels im Durchgangskanal dient die Aufnahmehülse dem Aufnehmen und Halten eines Fügeelements in Vorbereitung eines Fügevorgangs bzw. eines Setzvorgangs benachbart zur Austrittsöffnung des Durchgangskanals. Denn während eines Setzvorgangs des Stempels durchläuft das Arbeitsende des Stempels bevorzugt die Austrittsöffnung, nimmt dabei das vorpositionierte Fügeelement mit und drückt es in das benachbarte Bauteil ein. Diese bevorzugte Vorpositionierung des Fügeelements wird durch Haltearme gewährleistet, die außerhalb des Durchgangskanals und eines Fügekanals des Setzkopfes an der Aufnahmehülse befestigt sind. Auf diese Weise sind die Haltearme und der Stempel sowie die Innenwand des Durchgangskanals losgelöst voneinander derart bewegbar, dass Verschleiß und Reibungsverluste von in gegenseitigem Kontakt bewegten Komponenten minimiert werden.

Dennoch sind die außerhalb des Durchgangskanals angeordneten Haltearme passend geformt, um das Fügeelement geeignet vor dem Arbeitsende bzw. vor der Stempelfläche betrachtet in Fügerichtung zu positionieren und um einen bevorstehenden Fügevorgang geeignet vorzubereiten. Zu diesem Zweck ragt jeweils ein das Fügeelement haltendes Funktionsende der Haltearme in Fügerichtung unter den Stempel, um übernahmebereit für die Stempelfläche das Fügeelement lösbar zu halten. Die entsprechende Halteposition des Fügeelements liegt vorzugsweise innerhalb oder außerhalb des Durchgangskanals der Aufnahmehülse.

Ein weiterer Vorteil der Anordnung der Haltearme außerhalb des Durchgangskanals besteht in der leichten Zugänglichkeit dieser Haltearme. Denn bei einem möglicherweise auftretenden Verschleiß sind diese Haltearme aufgrund ihrer leichten Zugänglichkeit ohne weiteres austauschbar, was im Vergleich zu bekannten Setzkopfkonstruktionen Stillstandszeiten einer Presse oder eines Setzgeräts reduziert.

Erfindungsgemäß ist die Aufnahmehülse relativ zum Stempel federvorgespannt und begrenzt in Längsrichtung des Stempels bewegbar, so dass in einer Ruheposition des Stempels das Arbeitsende des Stempels innerhalb des Durchgangskanals und entfernt von seiner Austrittsöffnung und in einer Arbeitsposition des Stempels benachbart zu der Austrittsöffnung, vorzugsweise innerhalb oder außerhalb des Durchgangskanals, angeordnet ist.

Die Aufnahmehülse und der Stempel sind vorzugsweise formschlüssig derart miteinander verbunden, dass eine gewisse Relativbewegung in Längsrichtung des Stempels zwischen Aufnahmehülse und Stempel gewährleistet ist. Diese Relativbewegung stellt sicher, dass der Stempel eine Ruheposition und eine Arbeitsposition einnehmen kann. In Abhängigkeit von der Ruheposition und der Arbeitsposition des Stempels muss die Aufnahmehülse ebenfalls geeignet positioniert werden, da ihre Position einerseits eine ungestörte Zufuhr eines neuen Fügeelements gewährleisten muss oder andererseits die Positionierung des Fügeelements unter der Stempelfläche und damit einen reibungslosen Ablauf eines Fügevorgangs sicherstellt. Die bevorzugt genutzte formschlüssige Verbindung zwischen Aufnahmehülse und Stempel legt zudem den Umfang der Relativbewegung auf ein bevorzugtes Minimum fest, so dass für das relative Versetzen von Stempel und Aufnahmehülse in Bezug zueinander ein Minimum an Zeit und Platz erforderlich sind. Dies wirkt sich wiederum bevorzugt günstig auf zu erreichende Taktzeiten einer Fügevorrichtung beim Herstellen mehrerer aufeinanderfolgender Fügeverbindungen aus. Zum Setzen eines Schweißhilfsfügeteils oder allgemein einer Gruppe von Fügeelementen ist es bevorzugt, wenn der Stempel bis zum Abschluss des Fügevorgangs mit seiner bevorzugten Stempelfläche den Durchgangskanal nicht verlässt. Entsprechend passiert in dieser bevorzugten Ausgestaltung die Stempelfläche nicht eine Austrittsöffnung des Durchgangskanals der Aufnahmehülse. Diese Anordnung wird bevorzugt bei einem Betrieb des Setzkopfes in einer Presse genutzt. Gemäß einer weiteren bevorzugten Ausgestaltung vorliegender Erfindung passiert bis zum Abschluss eines Fügevorgangs eines Fügeelements in ein Bauteil der Stempel die Austrittsöffnung des Durchgangskanals der Aufnahmehülse. Diese Konstruktion ist vorzugsweise dann von Vorteil, wenn ein Setzkopf nach dem Fügen seitlich von der Fügestelle entfernt wird und damit ein Kopf des Fügeelements nicht mit der Aufnahmehülse kollidiert.

Erfindungsgemäß sind die Aufnahmehülse und der Stempel formschlüssig aneinander geführt, sodass die Aufnahmehülse drehungsfrei relativ zum Stempel axial versetzbar ist.

Bereits oben wurde angesprochen, dass die bevorzugte formschlüssige Verbindung zwischen Aufnahmehülse und Stempel einen Relativversatz zwischen der Aufnahmehülse und dem Stempel gezielt limitiert. Zudem wird durch den bevorzugten Formschluss gewährleistet, dass eine Relativdrehung zwischen Aufnahmehülse und Stempel verhindert ist. Auf diese Weise behält das vorpositionierte Fügeelement seine Lageorientierung und Anordnung in Bezug auf das Arbeitsende des Stempels bei. Des Weiteren sorgt die Beschränkung auf nur die notwendigsten Relativbewegungen zwischen Aufnahmehülse und Stempel für einen minimalen Verschleiß sowie damit verbundene Reibungsverluste. Dies wirkt sich zudem positiv auf den im späteren Betrieb bereitzustellenden Wartungsaufwand aus.

Ebenfalls erfindungsgemäß sind die Haltearme L-förmig vorgesehen und ein kürzerer L-Schenkel ragt mit einer Halte-Löse-Kontur für das Fügeelement lateral einwärts in den Durchgangskanal der Aufnahmehülse. Gemäß einer nicht erfindungsgemäßen alternative ordnen die kürzeren L-Schenkel durch ihre Orientierung lateral einwärts die Halte-Löse-Kontur für das Fügeelement angrenzend an die Austrittsöffnung aber vorzugsweise außerhalb des Durchgangskanals der Aufnahmehülse an.

Die erfindungsgemäßen L-förmigen Haltearme sind an der Außenseite der Aufnahmehülse befestigt. Damit gewährleisten sie die oben bereits diskutierte leichte Zugänglichkeit und die mit geringem Aufwand verbundene Austauschbarkeit. Zudem gewährleistet diese Anordnung, dass eine Bewegung des Stempels im Durchgangskanal der Aufnahmehülse nicht durch die Haltearme beeinträchtigt oder behindert wird. Erfindungsgemäß besitzen die Haltearme die bereits oben angesprochene L-Form, so dass der kürzere L-Schenkel zur Bereitstellung der Halte-Löse-Kontur für das Fügeelement genutzt werden kann. Diese Halter-Löse-Kontur stellt sicher, dass zunächst durch eine formschlüssige und/oder eine kraftschlüssige Verbindung der Halte-Kontur ein hinzugefügtes Fügeelement zwischen den lateral einwärts ragenden Halteenden verlässlich gehalten wird. Da die Halteenden bevorzugt radial einwärts federnd das Fügeelement halten, sorgt eine mit geringem Aufwand durch den Stempel lösbare kraftschlüssige Verbindung zwischen den Halteenden und dem Fügeelement für ein verlässliches Vorpositionieren des Fügeelements vor dem Arbeitsende des Stempels. Erfindungsgemäß ist eine Halte-Kontur in den

Halteenden vorgesehen, die in ihrer Form an das zu fixierende Fügeelement angepasst ist, so dass die kraftschlüssige Verbindung zwischen Fügeelement und Halteenden durch eine zusätzliche formschlüssige Verbindung unterstützt wird.

Die ebenfalls an den Halteenden vorgesehene Löse-Kontur stellt eine Formgebung in Abstimmung mit der Bewegung des fügenden Arbeitsendes des Stempels dar. Denn im Falle eines Fügevorgangs bewegt sich das Arbeitsende und im Speziellen die Stempelfläche mit dem Fügeelement und somit das Fügeelement zwischen den Halteenden hindurch, um das Fügeelement aus der Halte-Löse-Kontur zu lösen und nachfolgend in das Bauteil zu setzen. In diesem Zusammenhang ist es erfindungsgemäß bevorzugt, wenn in Fügerichtung geneigt aufeinander zu laufende Ebenen an den Halteenden vorgesehen sind, sodass durch die axiale Bewegung des Stempels in Fügerichtung die Halteenden durch das Fügeelement und/oder das Arbeitsende des Stempels radial auswärts gedrückt werden. Mithilfe dieser bevorzugten Konstruktion ist eine Lösebewegung des Arbeitsendes des Stempels für das Fügeelement aus der Verbindung mit den Halteenden möglichst kontinuierlich in die Fügebewegung des Fügeelements in das Bauteil integrierbar.

Erfindungsgemäß weist die Halte-Löse-Kontur zumindest einen formschlüssigen Halt für das Fügeelement sowie eine geneigte Lösefläche spitzwinklig angeordnet zur Fügerichtung zum stempelseitigen Freigeben des Fügeelements aus der Halte-Löse-Kontur auf. Diese spezielle geometrische Ausgestaltung der Halteenden wurde bereits in dem vorhergehenden Absatz qualitativ diskutiert.

Gemäß einer weiteren bevorzugten Ausgestaltung vorliegender Erfindung stellt ein längerer L-Schenkel des L-förmigen Haltearms eine Befestigungsstruktur bereit, mit der der L-förmige Schenkel austauschbar an der Aufnahmehülse befestigbar ist.

Vorzugsweise wird der L-förmige Halterarm durch eine Blattfeder gebildet. Diese Blattfeder ist mit ihrem längeren Schenkel an der Außenseite der Aufnahmehülse befestigt. Eine derartige Befestigung realisiert beispielsweise eine Schraubverbindung oder eine Rastverbindung, welche bei notwendiger Wartung leicht gelöst und wieder geschlossen werden kann.

Gemäß einer weiteren bevorzugten Ausgestaltung des erfindungsgemäßen Setzkopfes weist die Aufnahmehülse benachbart zur Austrittsöffnung des Durchgangskanals eine einseitig offene Profilbahn auf, die zumindest abschnittsweise an gegenüberliegenden Seiten durch die Halteenden gebildet wird und mit der das Fügeelement einer Fügeposition in Fügerichtung unter der Stempelfläche des Stempels zuführbar ist.

Erfindungsgemäß bevorzugt definieren die lateral oder radial einwärts ragenden Halteenden der Haltearme eine Vorposition des zugeführten Fügeelements benachbart zur Austrittsöffnung des Durchgangskanals. Entsprechend sind bevorzugt die Halteenden derart angeordnet, dass das vorpositionierte und durch die Halteenden gehaltene Fügeelement innerhalb des Durchgangskanals und angrenzend an die Austrittsöffnung angeordnet ist oder außerhalb des Durchgangskanals angrenzend an die Austrittsöffnung angeordnet ist. Um das Fügeelement mit den Halteenden im Durchgangskanal zu positionieren, weist die Aufnahmehülse passende Aussparungen oder Fenster auf. Diese Aussparungen oder Fenster werden von den Halteenden lateral einwärts durchgriffen, um das Fügeelement zu halten. Diese bevorzugte unterschiedliche Vorposition des Fügeelements aufgrund der entsprechenden Anordnung der Halteenden wird vorzugsweise in Bezugnahme auf das zu fügende Bauteil, die vorhandenen Platzverhältnisse am Bauteil, den Schutz des Fügeelements in der Halteposition aufgrund äußerer Einflüsse oder unter Berücksichtigung weiterer äußerer Parameter gewählt.

Ebenfalls bevorzugt bilden die gegenüberliegend zueinander angeordneten Halteenden den Teil einer Profilbahn, über welche das Fügeelement einer passenden Vorposition für den bevorstehenden Fügevorgang zugeführt werden kann. Gemäß einer weiteren bevorzugten Ausgestaltung in diesem Zusammenhang bilden die Halteenden zumindest teilweise ein Aufnahmenest für das zuzuführende Fügeelement. Dieses Aufnahmenest definiert die durch das Fügeelement einzunehmende Vorposition.

Gemäß einer weiteren bevorzugten Ausführungsform vorliegender Erfindung sind die Halteenden lateral in den Durchgangskanal über die Haltearme elastisch federvorgespannt. Diese bevorzugte konstruktive Lösung basiert auf der Bereitstellung der L-förmigen Haltearme vorzugsweise als Blattfedern, die aufgrund ihrer Materialeigenschaften und Konstruktion die elastische Federvorspannung der Haltearme bereitstellen.

Gemäß einer weiteren bevorzugten Ausgestaltung des erfindungsgemäßen Setzkopfes bildet die einseitig offene Profilbahn in Kombination mit den federvorgespannten Halteenden das Aufnahmenest für ein Fügeelement, in welches das Fügeelement über ein mechanisches Stellglied versetzbar ist.

Erfindungsgemäß bevorzugt wird das Fügeelement über einen Profilschlauch in Richtung Setzkopf mithilfe von Druckluft zugeschossen. Es ist ebenfalls bevorzugt, über eine geeignete Anordnung die Gravitationskraft zur Zufuhr des Fügeelements zum Setzkopf zu nutzen. Vorzugsweise steht das zugeschossene Fügeelement zunächst benachbart zum Stempel oder zu einem Adapterkolben des Setzkopfes an, der sich in einer Arbeitsposition befindet. Entsprechend blockiert der Stempel oder der Adapterkolben oder ein anderer Teil des Setzkopfes das Aufnahmenest, so dass das Fügeelement nicht in das Aufnahmenest bewegt werden kann. Sobald das Aufnahmenest für die Zufuhr eines Fügeelements frei ist, bewegt das mechanische Stellglied das Fügeelement in die Vorposition, vorzugsweise in das Aufnahmenest.

Ein derartiges mechanisches Stellglied besteht vorzugsweise aus einem pneumatisch oder hydraulisch oder elektrisch angetriebenen Hebelmechanismus, beispielsweise ein Kniehebelmechanismus. Während des Betriebs des Stellglieds wird das Fügeelement mit dem Stellglied derart bewegt, dass das Stellglied das Fügeelement in das Aufnahmenest versetzt. Da vorzugsweise die Position des Stellglieds während seiner Bewegung erfassbar ist oder ein Maximalstellweg des Stellglieds durch Sensorik oder erfasste Steuersignale überwacht werden kann, lässt sich daraus bevorzugt ableiten, ob das Fügeelement die gewünschte Vorposition im Aufnahmenest erreicht hat. Entsprechend lassen sich über Fehlermeldungen bei einem fehlenden Erreichen des Aufnahmenests Handlungsweisen definieren, die die Zufuhr des Fügeelements zum Aufnahmenest erneut starten, eine Fehlpositionierung des Fügeelements untersuchen oder anzeigen oder eine Fehlersuche in Kombination mit der Zufuhr des Fügeelements starten.

Daher ist es erfindungsgemäß bevorzugt, eine Bewegung des Stellglieds positionsüberwacht durchzuführen, so dass eine Positionierung des Fügeelements im oder außerhalb des Aufnahmenests erfassbar und/oder bestimmbar ist.

Vorliegende Erfindung umfasst zudem eine Blechpresse in Kombination mit einem Setzkopf gemäß den oben beschriebenen bevorzugten Ausführungsformen.

Des Weiteren umfasst vorliegende Erfindung ein Setzgerät mit einem Setzkopf gemäß den oben beschriebenen bevorzugten Ausführungsformen.

Vorliegende Erfindung offenbart des Weiteren ein Fügeverfahren eines Fügeelements, insbesondere ein Schweißhilfsfiigeteil, mit einem Setzkopf, wie er oben gemäß unterschiedlicher Ausgestaltungen beschrieben worden ist. Das Fügeverfahren weist die folgenden Schritte auf: mit dem Stempel in einer Ruheposition Versetzen eines Fügeelements in eine Halteposition zwischen den Halteenden der Haltearme, Bewegen des Stempels aus der Ruheposition in eine Fügerichtung, wobei das Fügeelement in der Halteposition der Stempelfläche des Arbeitsendes des Stempels beabstandet vorgelagert ist, Aufsetzen der Aufnahmehülse, vorzugsweise direkt oder indirekt über das vorpositionierte Fügeelement, auf einem Bauteil, danach Versetzen des Stempels im Durchgangskanal relativ zur Aufnahmehülse und gegen die Federvorspannung zwischen dem Stempel und der Aufnahmehülse und Lösen des Fügeelements aus der Halteposition zwischen den Halteenden mit dem Arbeitsende des Stempels und Fügen des Fügeelements in das Bauteil.

Das oben beschriebene Fügeverfahren zeichnet sich durch die Wechselwirkung der unterschiedlichen konstruktiven Elemente des erfindungsgemäß bevorzugten Setzkopfes aus. Daher ist es im Rahmen des Fügeverfahrens ebenfalls bevorzugt, das Fügeelement durch ein Stellglied in die Halteposition zu versetzen. Als einen weiteren Schritt des erfindungsgemäß bevorzugten Fügeverfahrens ist es bevorzugt, ein neues Fügeelement über eine Elementzufuhr, insbesondere ein Profilschlauch, in eine Vorposition benachbart zum Aufnahmenest zuzuführen, während der Stempel das Aufnahmenest blockiert. Es ist in gleicher Weise bevorzugt, dass in der Arbeitsposition des Stempels ein anderer Teil des Setzkopfes das Aufnahmenest für die Zufuhr des Fügeelements blockiert. Dies ist bevorzugt der Adapterkolben.

Es ist des Weiteren erfindungsgemäß bevorzugt im vorliegenden Fügeverfahren, den Stempel aus einer Arbeitsposition zum Fügen des Fügeelements in die Ruheposition zu bewegen, wobei der Stempel unterstützt durch die Federvorspannung zwischen dem Stempel und der Aufnahmehülse formschlüssig begrenzt zumindest teilweise aus dem Durchgangskanal, vorzugsweise von einer Austrittsöffnung des Durchgangskanals der Aufnahmehülse, entfernt wird.

Die bevorzugt formschlüssige Verbindung zwischen Aufnahmehülse und Stempel gewährleistet den bereits oben diskutierten minimalen relativen Versatz zwischen Aufnahmehülse und Stempel. Auf diese Weise ist gewährleistet, dass mit einem minimalen Versatz der Stempel zwischen der Ruheposition und der Arbeitsposition hin und her bewegt werden kann. Gleichzeitig gewährleistet dieser Versatz, dass mit dem Stempel in der Ruheposition ein Fügeelement dem Aufnahmenest bevorzugt in die Vorposition zuführbar ist. In der Arbeitsposition des Stempels ist wiederum garantiert, dass das Fügeelement aus dem Aufnahmenest heraus verlässlich in ein Bauteil gefügt wird. Wird der Stempel in diesem Zusammenhang direkt über einen Antrieb oder indirekt über eine strukturelle Komponente, wie bevorzugt den Adapterkolben oder ähnliches, bevorzugt in die Ruheposition bewegt, wird der Stempel dazu entgegen der Fügerichtung teilweise aus dem Durchgangskanal der Aufnahmehülse heraus versetzt. Mit anderen Worten wird das Arbeitsende des Stempels von der Austrittsöffnung des Durchgangskanals der Aufnahmehülse entfernt. Wird der Stempel direkt über einen Antrieb oder indirekt über eine Strukturkomponente in Fügerichtung in die Arbeitsposition versetzt, d.h. es wird ein Fügeelement in eine Bauteil gesetzt, wird der Stempel weiter im Durchgangskanal in Fügerichtung versetzt. Beim finalen Fügen des Fügelements in das Bauteil befindet sich die Stempelfläche des Arbeitsendes des Stempels im Durchgangskanal benachbart zur Austrittsöffnung oder ist bündig mit dieser angeordnet oder ragt mit einem Teil des Arbeitsendes über diese hinaus aus dem Durchgangskanal.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine Seitenansicht einer bevorzugten Ausführungsform eines Setzkopfes für eine Presse,
- Figur 2: eine Ausschnittsvergrößerung einer bevorzugten Kombination des Stempels mit einer Aufnahmehülse in einer seitlichen axialen Schnittansicht, in der der Stempel bevorzugt direkt über eine Antriebseinheit antreibbar ist,
- Figur 3: eine perspektivische Seitenansicht einer bevorzugten Kombination aus Stempel, Adapterkolben und Aufnahmehülse mit außen angeordneten Haltearmen,
- Figur 4: eine seitliche axiale Schnittansicht einer bevorzugten Kombination aus Stempel und Aufnahmehülse mit einem Fügeelement in einer Vorposition und gehalten durch die Halteenden der Haltearme, in der der Stempel bevorzugt indirekt über den Adapterkolben oder eine andere Struktur antreibbar ist,
- Figur 5: eine seitliche axiale Schnittansicht der bevorzugten Ausführungsform gemäß Figur 4, mit einem durch die Bewegung des Stempels gesetzten Fügeelement in ein benachbartes Bauteil,
- Figur 6: eine schematische Draufsicht auf ein zugeführtes Fügeelement, welches aufgrund der Blockade durch den Adapterkolben noch nicht in eine Vorposition versetzt werden kann,
- Figur 7: eine schematische Ansicht des Fügeelements in einer Schnittansicht positioniert vor einem bevorzugten blockierten Aufnahmenest (siehe Fig. 6) zwischen den bevorzugten Halteenden der Haltearme,
- Figur 8: eine schematische Draufsicht auf die bevorzugte Zufuhr des Fügeelements mit dem mechanischen Stellglied in die Fügeposition im bevorzugten Aufnahmenest,
- Figur 9: eine schematische Schnittansicht des Setzkopfes aus Fig. 8 entlang der Zufuhrbahn des Fügeelements und in der Ebene des Aufnahmenests,
- Fig. 10: eine schematische Schnittansicht des Setzkopfes aus Fig. 8 entlang der Zufuhrbahn des Fügeelements und in der Ebene des Aufnahmenests, während das bevorzugte Stellglied das Fügeelement in das Aufnahmenest bewegt,
- Figur 11: eine bevorzugte axiale Schnittansicht entlang der Stempelachse, die das Fügeelement im Aufnahmenest gemäß Figur 10 zeigt, und

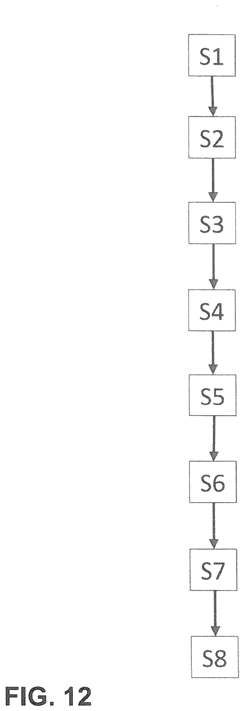

- Figur 12: ein Flussdiagramm einer bevorzugten Ausführungsform des erfindungsgemäßen Verbindungsverfahrens.

### 5. Detaillierte Beschreibung der bevorzugten Ausführungsformen

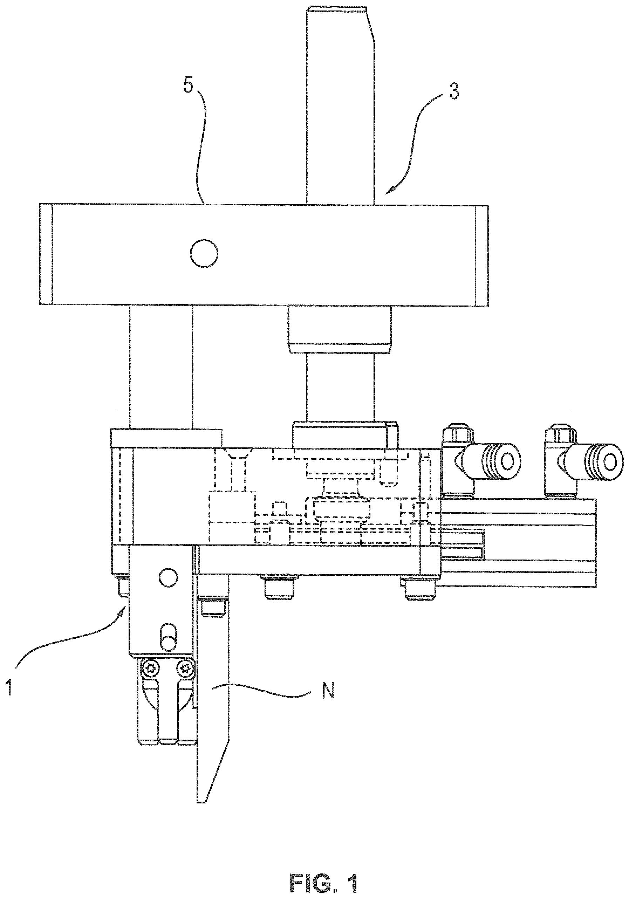

Figur 1 zeigt einen Setzkopf 1, der in bevorzugten Ausgestaltungen in unterschiedlichen Fügevorrichtungen eingesetzt wird. Der Setzkopf 1 der Figur 1 ist mit einer Teleskopeinheit 3 und dem schematisch dargestellten Oberholm 5 einer Presse (nicht gezeigt) an den Einsatz in einem Pressenwerkzeug angepasst. Derartige Pressenwerkzeuge finden beispielsweise im Fahrzeugbau oder im Waggonbau Anwendung. Diese Pressenwerkzeuge dienen neben dem Fügen eines Fügeelements durch den Setzkopf 1 gleichzeitig der gezielten Formgebung von Blechen, die beispielsweise die spätere Fahrzeugkarosserie bilden.

Bestehen die durch die Presse zu formenden Bleche aus einem nicht oder schlecht schweißbaren Material, setzt der Setzkopf 1 bevorzugt gleichzeitig zur Formgebung des Blechs oder des Bauteils ein Schweißhilfsfügeteil 7 aus schweißbarem Material in das Blech. Damit werden Arbeitsprozesse kombiniert und die Weiterverarbeitung des geformten Blechs erleichtert.

Neben dem Einsatz des Setzkopfes 1 in einer Presse zum Setzen eines Schweißhilfsfügeteils 7 wird der Setzkopf 1 bevorzugt in einem Setzgerät für Stanzniete, Bolzen, Schrauben, Muttern, zum Clinchen sowie zur Durchführung anderer bekannter Verbindungsverfahren eingesetzt. Entsprechend fügt der Setzkopf 1 Verbindungselemente verschiedener Ausgestaltung in mindestens ein Bauteil 9, wobei der Stempel 10 des Setzkopfes in Abstimmung auf das Fügeelement 7 und den Fügevorgang drehbar oder nicht drehbar und axial bewegbar vorgesehen ist.

In der weiteren Beschreibung wird beispielgebend auf das Setzen des Schweißhilfsfügeteils 7 in ein Bauteil 9 Bezug genommen. Das Schweißhilfsfügeteil 7 steht exemplarisch für ein beliebiges Fügeelement. Das Bauteil 9 steht gleichermaßen als ein Beispiel für nur ein oder eine Mehrzahl von Bauteilen.

Zur Vorbereitung eines Fügevorgangs setzt vorzugsweise ein Niederhalter N auf dem mindestens einen Bauteil 9 auf. Alternativ ist es ebenfalls bevorzugt, das mindestens eine Bauteil 9 oder eine Mehrzahl von Bauteilen über geeignete Klemmvorrichtungen an einer Unterlage oder einem Träger oder einem Amboss lösbar zu halten.

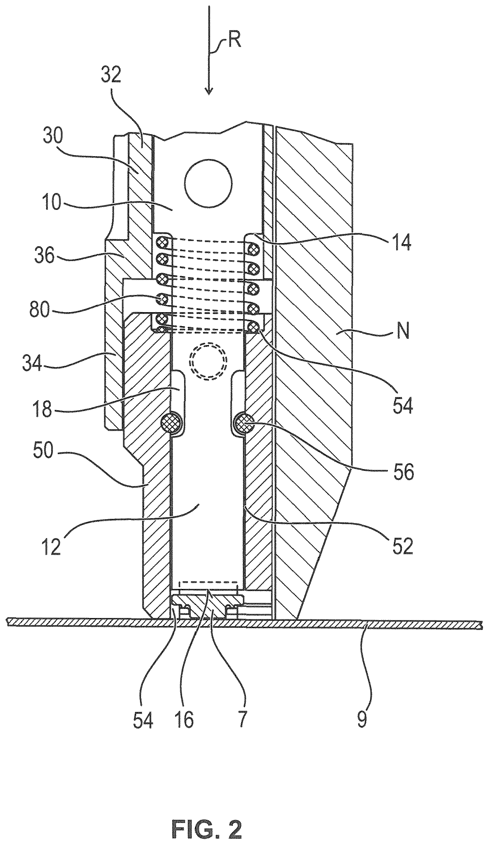

Der Setzkopf 1 ist in unterschiedlichen bevorzugten Ausführungsformen im größeren Detail in den Figuren 2 bis 11 gezeigt. Er umfasst einen Adapterkolben 30, in dem der Stempel 10 in seiner Längsrichtung bewegbar - also axial bewegbar - geführt ist.

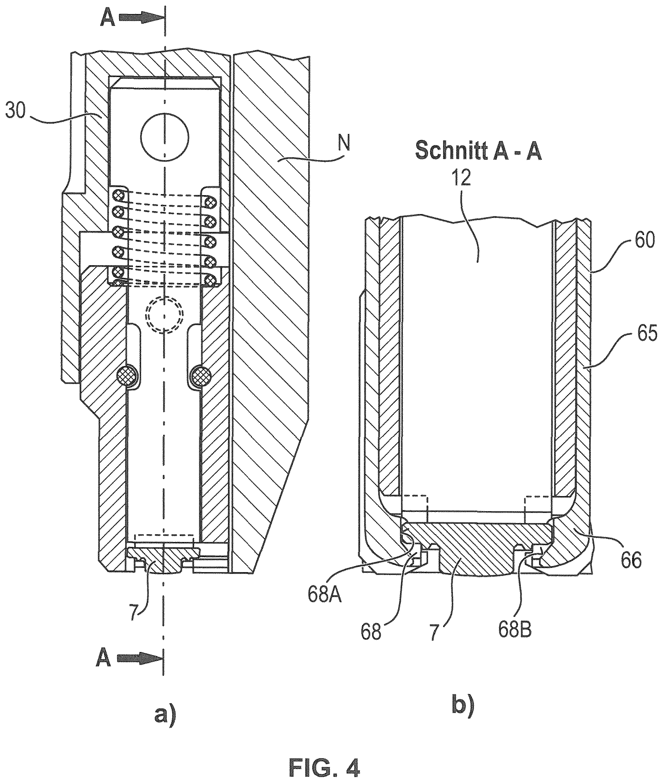

In bekannten Fügevorrichtungen, wie beispielsweise einem Stanznietsetzgerät, bildet der Adapterkolben 30 den Fügekanal. Diesem Fügekanal wird das Fügeelement zugeführt und durch diesen wird das Fügeelement durch den Stempel 10 in das Bauteil gesetzt. Der Stempel 10 wird dazu bevorzugt direkt über einen Antrieb in Fügerichtung R und entgegengesetzt dazu bewegt. Ein Setzkopf 1 mit direkt angetriebenem Stempel ist in Figur 2 angedeutet, da hier der Adapterkolben 30 nicht den Stempel 10 mitführt oder indirekt antreibt. In einer Presse wird bevorzugt der Stempel 10 innerhalb des Setzkopfes 1 nicht separat angetrieben, sondern mit dem Pressenwerkzeug gemeinsam geführt oder gemeinsam versetzt. Daher ist der Stempel 10 vorzugsweise über den Adapterkolben 30 (vgl. Fig. 4) indirekt angetrieben. Die im Folgenden beschriebene Funktionsweise und der Aufbau des Setzkopfes 1 bezieht sich gleichermaßen bevorzugt auf die direkte und die indirekte Antriebsmöglichkeit des Stempels 10.

Gemäß einer bevorzugten Ausgestaltung vorliegender Erfindung führt und hält der Adapterkolben 30 zusätzlich zum Stempel 10 eine Aufnahmehülse 50. Dazu weist der Adapterkolben 30 zumindest zwei zueinander abgestufte Bereiche 32, 34 auf. Diese abgestuften Bereiche sind durch die Stufe 36 voneinander getrennt und weisen gemäß einer bevorzugten Ausgestaltung Führungskanäle unterschiedlicher Durchmesser auf. Vorzugsweise ist im Führungskanal des Bereichs 32 der Stempel 10 geführt. Der Führungskanal im Bereich 34 führt die Aufnahmehülse 50.

Die Aufnahmehülse 50 ist wiederum auf dem Stempel 10, vorzugsweise benachbart zu einem Arbeitsende 12 des Stempels 10, geführt. Der Stempel 10 und ein Durchgangskanal 52 (siehe unten) der Aufnahmehülse 50 weisen vorzugsweise einen runden Querschnitt auf. Daher ist gemäß einer bevorzugten Ausführungsform vorliegender Erfindung die Aufnahmehülse 40 hohlzylindrisch oder zumindest hohlzylinderfönnig ausgebildet. Entsprechend weist der Durchgangskanal 52 eine im Querschnitt runde innere Führungswand auf. Die Außenseite der Aufnahmehülse 50 ist ebenfalls im Querschnitt rund geformt, um vom Adapterkolben 30 geführt zu werden.

Es ist ebenfalls bevorzugt und je nach Anwendungsfall einstellbar, dass der Stempel 10 eine eckige oder allgemein eine unrunde Querschnittsform aufweist. Dies hat eine entsprechend an die Stempelform angepasste Querschnittsgestaltung des Durchgangskanals 52 der Aufnahmehülse 50 zur Folge, um den Stempel 10 und die Aufnahmehülse 50 verlässlich aneinander führen zu können. Auch die Außenseite der Aufnahmehülse 50 ist in Kombination mit dem Adapterkolben 30 entsprechend in ihrer Formgestaltung anpassbar.

Der Stempel 10 wird über einen Antrieb (nicht gezeigt) direkt oder über den Adapterkolben 30 in einer Fügerichtung R und zurück bewegt. Der Antrieb des Stempels 10 und somit bevorzugt der Fügevorrichtungen ist gemäß unterschiedlicher bevorzugter Ausgestaltungen vorliegender Erfindung elektrisch, hydraulisch, pneumatisch oder mechanisch oder eine Kombination von diesen.

Die Aufnahmehülse 50 ist vorzugsweise durch den Stempel 10 und den Adapterkolben 30 geführt, wobei vorzugsweise auch eine Führung allein durch den Stempel 10 ausreichend wäre. Zu diesem Zweck wird das Arbeitsende 12 des Stempels 10 in dem Durchgangskanal 52 der Aufnahmehülse 50 geführt. Der Durchgangskanal 52 ist konzentrisch zum Arbeitsende 12 des Stempels 10 und damit zum Stempel 10 insgesamt angeordnet.

Zwischen einer Schulter 14 des Stempels 10, die der Aufnahmehülse 50 zugewandt ist, und einer dem Stempel 10 zugewandten Stirnseite 54 der Aufnahmehülse 50 ist eine Feder 80 angeordnet. Durch die Feder 80, vorzugsweise eine auf dem Stempel 10 angeordnete Schraubenfeder, sind der Stempel 10 und die Aufnahmehülse 50 gegeneinander federvorgespannt. Das hat zur Folge, dass sich der Stempel 10 und die Aufnahmehülse 50 voneinander entfernen, wenn das Arbeitsende 12 und/oder die Aufnahmehülse 50 entlastet werden/wird. Entlasten heißt in diesem Zusammenhang, dass der Stempel 10 nach Beendigung eines Fügevorgangs entgegen der Fügerichtung R bewegt wird und sich dadurch vom Fügeelement 7 löst. Die Aufnahmehülse 50 wird entlastet, wenn der Setzkopf 1 entgegen der Fügerichtung R bewegt wird, sodass die Aufnahmehülse 50 vom Bauteil 9 abgehoben wird oder dieses mechanisch entlastet.

Die Vorspannung der Feder 80 sorgt dafür, dass im Falle der mechanischen Entlastung von Aufnahmehülse 50 und/oder Stempel 10 das Arbeitsende 12 des Stempels 10 entgegen der Fügerichtung R teilweise aus dem Durchgangskanal 52 bewegt wird. Das hat zur Folge, dass sich eine Stempelfläche 16, mit der das Schweißhilfsfügeteil 7 in das Bauteil 9 gesetzt wird, von einer Austrittsöffnung 54 des Durchgangskanals 52 entfernt. Dadurch wird vorzugsweise ein Zuführbereich für das Schweißhilfsfügeteil 7 benachbart zur Austrittsöffnung 54 durch das Arbeitsende 12 freigegeben, wie unten näher erläutert ist.

Der durch die Vorspannung der Feder 80 erzeugte relative Axialversatz zwischen dem Stempel 10 und der Aufnahmehülse 50 wird bevorzugt durch eine Zwangsführung 18, 56 zwischen der Aufnahmehülse 50 und dem Stempel 10 in einer Länge begrenzt. Dazu greift vorzugsweise ähnlich einer Nut-und-Feder-Verbindung eine Kugel oder ein Vorsprung 56 in eine Axialnut 18 am Stempel 10 ein. Es ist ebenfalls bevorzugt, die Axialnut an der Innenwand des Durchgangskanals 52 und den Vorsprung am Stempel 10 vorzusehen. Gemäß einer weiteren bevorzugten Ausgestaltung durchläuft ein Passstift vollständig eine Durchgangsbohrung durch den Stempel entlang des Durchmessers des Stempels und steht an den radialen Seitenwänden des Stempels 10 hervor. Die vorstehenden Enden des Passstifts greifen jeweils in eine Führungsnut ein, um eine Linearführung bereitzustellen. Es versteht sich, dass die formschlüssige Zwangsführung 18, 56 ebenfalls bevorzugt eine Relativdrehung zwischen dem Stempel 10 und der Aufnahmehülse 50 verhindert.

Um einen drehbaren Stempel vorzusehen, der beispielsweise eine Schraube setzt, erstreckt sich die Axialnut 18 vorzugsweise vollständig entlang des Umfangs des Stempels (nicht gezeigt). Eine funktionell ähnliche Anpassung ist bei der Kombination aus Passstift und Führungsnut realisierbar.

Wird der Stempel 10 entgegen der Fügerichtung R bewegt, erzeugt die Vorspannung der Feder 80 zunächst den maximal möglichen Axialversatz zwischen dem Stempel 10 und der Aufnahmehülse 50. Dieser maximale Axialversatz ist durch die Zwangsführung 18, 56 definiert. Sobald durch die Rückbewegung des Stempels 10 entgegen der Fügerichtung R - direkt erzeugt durch einen Antrieb oder durch eine indirekte Bewegung über den Adapterkolben 30 - der maximale Axialversatz erreicht ist, führt der Stempel 10 durch eine sich fortsetzende Bewegung entgegen der Fügerichtung R die Aufnahmehülse 50 und entfernt sie vom Bauteil 9.

Bei maximalem Axialversatz zwischen der Aufnahmehülse 50 und dem Stempel 10 hat der Stempel 10 und vorzugsweise sein Arbeitsende 12 mit der Stempelfläche 16 eine Ruheposition erreicht. Die Ruheposition ist bevorzugte Voraussetzung, um ein Fügeelement 7 in einem Aufnahmenest 92 (siehe unten) benachbart zur Austrittsöffnung 54 des Durchgangskanals 52 für einen Fügevorgang vorzupositionieren.

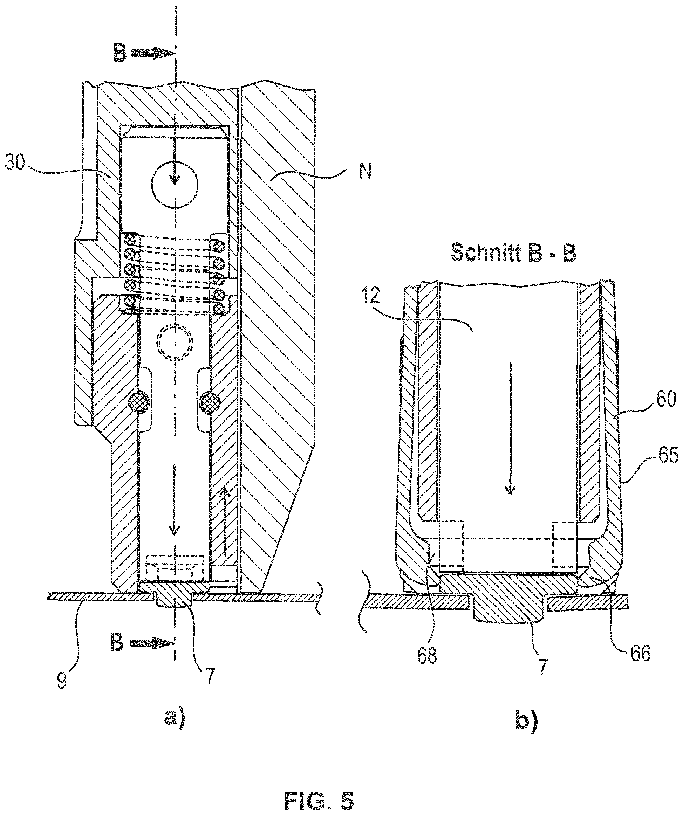

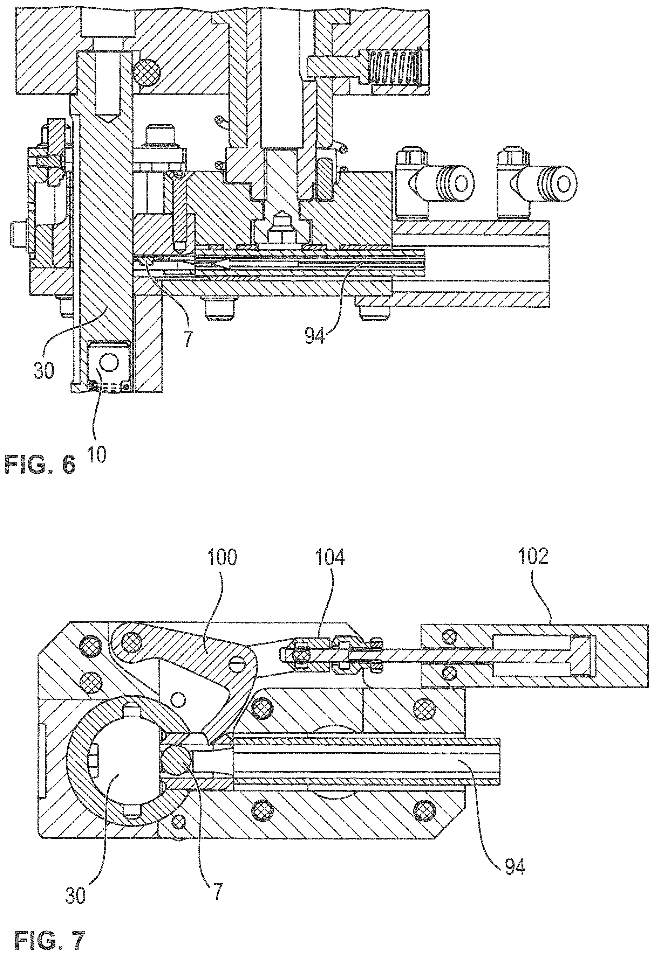

Ist der Stempel 10 in Fügerichtung R ausgefahren und die Stempelfläche 16 befindet sich während eines Fügevorgangs benachbart zur Austrittsöffnung 54, dann befindet sich der Stempel 10 und sein Arbeitsende 12 in einer Arbeitsposition. In der Arbeitsposition (siehe Figur 5b) blockiert das Arbeitsende 12 das Aufnahmenest 92, sodass kein Fügeelement 7 dem Aufnahmenest zugeführt werden kann. In alternativer Ausgestaltung des Setzkopfes 1 ist es ebenfalls bevorzugt, dass der Adapterkolben 30 das Aufnahmenest 92 blockiert, sodass kein Fügeelement 7 dem Aufnahmenest 92 zugeführt werden kann (siehe Figuren 6 und 7).

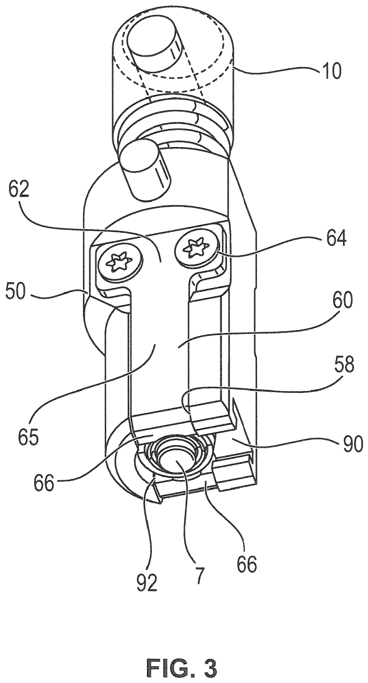

Bezugnehmend auf die Figuren 3, 4 und 5 und im Speziellen auf die Schnittbilder der Figuren 4b und 5b weist die Aufnahmehülse 50 einander gegenüberliegend zwei Haltearme 60 auf. Die Haltearme 60 sind außerhalb des Durchgangskanals 52 bevorzugt außen an der Aufnahmehülse 50 befestigt. Die Haltearme 60 weisen ebenfalls bevorzugt eine langgestreckte Form auf und verlaufen parallel zur Stempelachse. Zur Befestigung der Haltearme 60 ist an einem stempelzugewandten Ende 62 der Haltearme 60 eine Befestigungsstruktur 64 vorgesehen. Die Befestigungsstruktur 64, die vorzugsweise passende Öffnungen für eine Schraubverbindung mit der Aufnahmehülse 50, eine Schnapp- oder eine Rastverbindung bereitstellt, gewährleistet einen einfachen Wechsel der Haltearme 60 im Fall der Abnutzung, eines Versagens oder einer Anpassung an eine bestimmte Geometrie eines Fügeelements 7.

Erfindungsgemäß bevorzugt werden die Haltearme 60 durch Metallfedern mit einer L-förmigen Gestalt gebildet. Ein längerer L-Schenkel 65 weist vorzugsweise das Ende 62 mit Befestigungsstruktur 64 auf.

Ein kürzerer L-Schenkel 66 erstreckt sich lateral oder radial einwärts ragend bezogen auf den längeren L-Schenkel 65 in Richtung Durchgangskanal 52.

Gemäß einer bevorzugten Ausgestaltung vorliegender Erfindung ist an den kürzeren L-Schenkeln 66 an der lateral oder radial einwärts ragenden Stirnseite eine Halte-Löse-Kontur 68 vorgesehen. Denn die Haltearme 60 und im Speziellen die kürzeren L-Schenkel 66 halten das Fügeelement 7 in einer Vorposition vor Beginn eines Fügevorgangs. Zu diesem Zweck ist die Halte-Löse-Kontur 68 angepasst, um das Fügeelement 7 lösbar zu befestigen bzw. zu fixieren.

Dabei ist es erfindungsgemäß bevorzugt, dass das Fügeelement 7 an äußeren Abschnitten gehalten wird, die später beim Fügen des Fügeelements 7 in das Bauteil 9 eingepresst werden. Die dafür erforderliche Struktur der stirnseitigen Enden der kürzeren L-Schenkel 65 klammern dazu lösbar das Fügeelement 7. Während des Fügevorgangs werden die kürzeren L-Schenkel 66 mit ihren stirnseitigen Halteenden rechtzeitig relativ zum Fügeelement 7 entgegen der Fügerichtung R und seitlich dazu bewegt. Entsprechend wird eine Kollision zwischen den L-Schenkeln 66 und dem Bauteil 9 verhindert. Durch die Kombination von Stempel 10 und Aufnahmehülse 50 wird vorzugsweise eine gegenläufige Bewegung initialisiert, die ohne aktiven Antrieb auskommt. Zudem wird das Fügeelement 7 bevorzugt zu einem Zeitpunkt freigegeben, zu dem es bereits teilweise in das Bauteil 9 gefügt ist und nicht mehr verrutschen oder aus dem Verbund fallen kann.

Vorzugsweise greift die Halte-Löse-Kontur 68 mit lateral oder radial einwärts gerichteten Federkräften an und bevorzugt unter einem Kopf des Fügeelements 7 an. Es ist gleichermaßen bevorzugt, das Fügeelement 7, beispielsweise ein Bolzen, an einer Schaftfläche zu halten. Entsprechend ist die Halte-Löse-Kontur 68 bevorzugt komplementär zu einem Halteabschnitt der Außenseite des Fügeelements 7 ausgebildet, wobei der Halteabschnitt am Fügeelement 7 durch den Fügevorgang in das Bauteil 9 eingedrückt wird. Vorzugsweise ist das Fügeelement 7 formschlüssig und/oder kraftschlüssig sowie lösbar über die Halte-Löse-Kontur 68 im Aufnahmenest 92 für den Fügevorgang positionieren.

Vorzugsweise ist die Länge des längeren L-Schenkels 65 derart gewählt, dass die kürzeren L-Schenkel 66 mit der Halte-Löse-Kontur 68 benachbart zur Austrittsöffnung 54 in den Durchgangskanal 52 ragen. Basierend auf dieser Konfiguration wird das Fügeelement 7 innerhalb des Durchgangskanals 52 angrenzend an die Austrittsöffnung 54 gehalten. Durch diese Anordnung ist das durch die Haltearme 60 gehaltene Fügeelement 7 vor äußeren Einflüssen bei der Anfahrt der Fügestelle durch den Setzkopf 1 geschützt. Um diese Anordnung der kürzeren L-Schenkel 66 zu ermöglichen, durchgreifen diese eine Aussparung 58 in der Aufnahmehülse 50 (siehe Figur 3). Diese Aussparung 58 ist ebenfalls als Fenster oder Öffnung (nicht gezeigt) in der Aufnahmehülse 50 realisierbar.

Weiterhin bevorzugt ist die Position der kürzeren L-Schenkel 66 in Abstimmung mit dem Fügeelement 7 derart gewählt, dass das Fügeelement 7 geringfügig aus dem Durchgangskanal 52 in stempelabgewandter Richtung vorsteht oder mit dem stempelabgewandten Ende der Aufnahmehülse 50 und des Durchgangskanals 52 abschließt.

Wie man anhand des Schnittbildes von Figur 4b erkennen kann, hält vorzugsweise eine parallel zur Außenseite des Fügeelements 7 angeordnete Haltefläche 68A, hier eine parallel zur Längsachse des Stempels 10 angeordnete Haltefläche, das Fügeelement 7, vorzugsweise die Außenseite des Kopfes des Fügeelements 7, fest. In Fügerichtung R schließt sich an die Haltefläche 68A eine Lösefläche 68B an. Die Lösefläche 68B schließt vorzugsweise mit der Längsachse des Stempels 10 oder der Fügerichtung R einen Winkel <90° ein. Entsprechend ist die Lösefläche 68B radial einwärts und in Fügerichtung R geneigt angeordnet. Die bevorzugte Anordnung der Lösefläche 68B führt dazu, dass ein durch den Stempel 10 in Fügerichtung R bewegtes Fügeelement 7 auf der Lösefläche 68B abgleitet. Dabei werden die kürzeren L-Schenkel 66 mit der Halte-Löse-Kontur 68 durch das Fügeelement 7 lateral oder radial auswärts gedrückt und geben das Fügeelement 7 frei (siehe Figur 5b). Setzt sich die Bewegung des Stempels 10 in Fügerichtung R fort, wird das Fügeelement 7 in das Bauteil 9 gesetzt. Die Lösefläche 68B realisiert neben der oben beschriebenen Lösefunktion aber auch eine Haltefunktion, mit der die Wirkung der Halteflächen 68A ergänzt wird. Denn die bevorzugten Löseflächen 68B greifen unter den Kopf des Fügelements 7, um einen axialen lösbaren Hinterschnitt in Fügerichtung R zu bilden. Dieser die Halteflächen 68A ergänzende elastisch bzw. federn lösbare Hinterschnitt unterstützt bevorzugt die Verliersicherung der Halteenden 66. Denn die Halteflächen 68A und die Löseflächen 68B halten jeweils allein oder in Kombination das Fügeelement 7 solange, bis erst der Stempel 10 das Fügelement 7 aus diesem Halt der Halte-Löse-Kontur 68 in das Bauteil 9 fügt.

Sobald das Fügeelement 7 gesetzt und sich das Arbeitsende 12 des Stempels 10 von der Arbeitsposition entfernt haben, federn die kürzeren L-Schenkel 66 zurück in die Ausgangsposition. In der Ausgangsposition ist die Halte-Löse-Kontur 68 der kürzeren L-Schenkel 66 wieder bereit für die Aufnahme eines Fügeelements 7.

Gemäß der bevorzugten Ausgestaltung in Figur 2 setzt bei einem Bewegen des Stempels 10 in Fügerichtung R zunächst das Fügeelement 7 auf der Oberfläche des Bauteils 9 auf. Es ist ebenfalls bevorzugt, dass die Aufnahmehülse 50 zuerst auf dem Bauteil 9 aufsetzt. Dieses Vorgehen ist passend zum durchzuführenden Fügevorgang und/oder zum zu verarbeitenden Fügeelement 7 wählbar. Bewegt sich der Stempel 10 weiter in Fügerichtung R, wird die Feder 80 komprimiert und die Stempelfläche 16 setzt nach einem Annährungsprozess auf dem Fügeelement 7 auf. Die Aufnahmehülse 50 und der Stempel 10 führen relativ zueinander eine gegenläufige Bewegung durch. In diesem Zusammenhang ist es von Bedeutung, dass die Zwangsführung 18, 56 dem Arbeitsende 12 des Stempels 10 ausreichend axialen Bewegungsspielraum in Fügerichtung R lässt, damit der Stempel 10 das Fügeelement 7 vollständig in das Bauteil 9 setzen kann.

Der oben beschriebene Vorgang vollzieht sich auf die gleiche Weise, selbst wenn das Fügeelement 7 vollständig im Durchgangskanal 52 aber angrenzend an die Austrittsöffnung 54 angeordnet wäre. In diesem Fall würde anstelle des Fügeelements 7 zunächst die Aufnahmehülse 50 auf dem Bauteil 9 aufsetzen, bevor der oben beschriebene Ablauf bis zum abschließenden Setzen des Fügeelements 7 stattfinden würde.

Wie man anhand der bevorzugten Ausführungsform der Aufnahmehülse 50 in Figur 3 erkennen kann, wird das Fügeelement 7 am Ende einer Profilbahn 90 in einem Aufnahmenest 92 in einer Vorposition zum Setzen in das Bauteil 9 gehalten. Das Aufnahmenest 92 ist angrenzend an die Austrittsöffnung 94 des Durchgangskanals 52 in der Aufnahmehülse 50 angeordnet.

Vorzugsweise ist das Aufnahmenest 92 nur einseitig offen. An dieser Stelle schließt sich vorzugsweise die Profilbahn 90 an, um das Fügeelement 7 dem Aufnahmenest 92 zuzuführen. Gemäß einer bevorzugten Ausführungsform vorliegender Erfindung wird die Profilbahn 90 angrenzend an die Aufnahmehülse 50 durch einen Profilschlauch 94 gebildet. Dieser Profilschlauch 94 hat vorzugsweise eine an das Fügeelement 7 angepasste Querschnittsform, um das Fügeelement 7 über den Profilschlauch 94 bevorzugt pneumatisch zuschießen zu können.

Gemäß einer bevorzugten Ausführungsform des Profilschlauchs 94 hat dieser einen T-förmigen Querschnitt für kopfgeführte Fügeelemente 7.

Um kurze Taktzeiten bei der Herstellung mehrerer Fügestellen zu erzielen, wird das Fügeelement 7 vorzugsweise über den Profilschlauch 94 dem Setzkopf 1 zugeführt, während sich der Stempel 10 in der Arbeitsposition befindet. Entsprechend blockiert das Arbeitsende 12 des Stempels 10 oder der Adapterkolben 30 den Zufuhrweg des Fügeelements 7 zum Aufnahmenest 92, wie es in den Figuren 6 und 7 gezeigt ist. Das Fügeelement 7 kann in diesem Fall nur soweit dem Setzkopf 1 zugeführt werden, bis das Fügeelement 7 am Adapterkolben 30 oder am Stempel 10 (nicht gezeigt) anliegt.

Da das Fügeelement 7 dem Aufnahmenest 92 noch nicht zugeführt werden kann, bleibt ein bevorzugt für die Zustellung des Fügeelements 7 in das Aufnahmenest 90 genutztes Stellglied 100 in seiner Ruheposition.

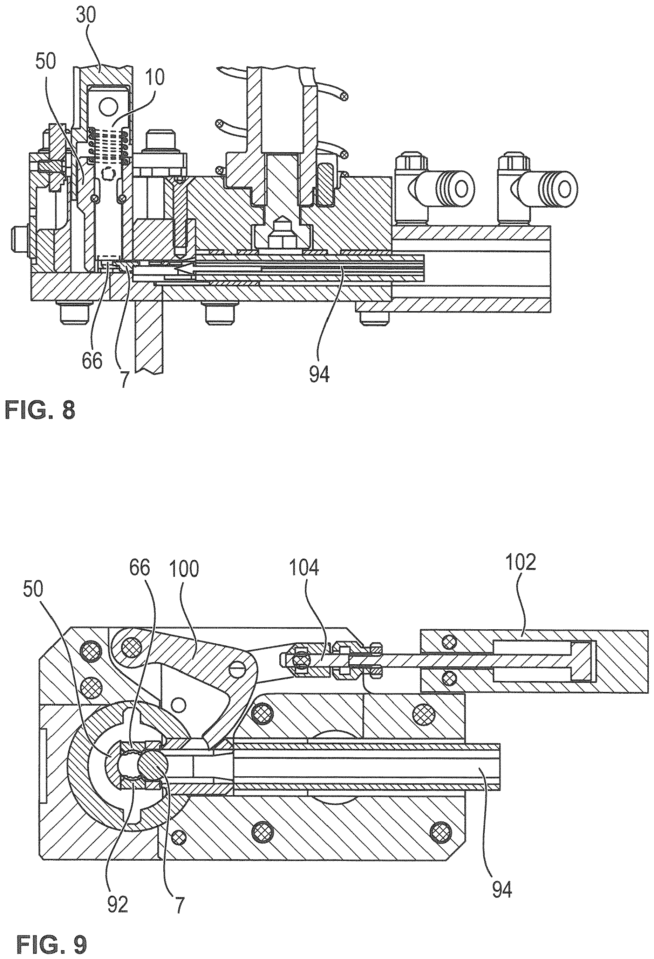

Für die Zufuhr des Fügeelements 7 zum Aufnahmenest 92 wird vorzugsweise der Setzkopf 1 derart verfahren, dass das Aufnahmenest 92, also der axiale Endbereich der Aufnahmehülse 50, mit dem Profilschlauch 94 fluchtend angeordnet ist (siehe Figur 8). Der Pfeil veranschaulicht schematisch die Zufuhrbewegung des Fügeelements 7 entlang des Profilschlauchs 94 oder allgemein einer Zufuhrstrecke.

Vorzugsweise wird das Fügeelement 7 im Profilschlauch 94 und in der Position vor dem Aufnahmenest 92 mit Luft beaufschlagt, um es pneumatisch soweit wie möglich dem Aufnahmenest 92 zuzuführen. Vorzugsweise lässt man den Luftdruck ausreichend lange am zugeführten Fügeelement 7 anstehen, damit ein möglicher Rückprall vom blockierenden Adapterkolben 30 oder Stempel 10 im Aufnahmenest 92 verkleinert wird. Gemäß unterschiedlicher bevorzugter Ausgestaltungen vorliegender Erfindung wird das Fügelement 7 dem Aufnahmenest 92 pneumatisch zugeschossen, wenn das Aufnahmenest 92 frei und zugänglich ist oder wenn das Aufnahmenest 92 noch blockiert ist.

Die kürzeren L-Schenkel 66 mit der Halte-Löse-Kontur 68 bilden gemeinsam mit der Aufnahmehülse 50 das Aufnahmenest 92. Da die Aufnahmehülse 50 gegenüber dem Profilschlauch 94 das Aufnahmenest 92 begrenzt, wird das Fügeelement 7 unter den Stempel 10 und nicht darüber hinaus zugeführt. Des Weiteren bilden vorzugsweise die kürzeren L-Schenkel 66 mit der Halte-Löse-Kontur 68 eine Fortsetzung der Profilbahn des Profilschlauchs 94 bis in das Aufnahmenest 92.

Vorzugsweise verengen die kürzeren L-Schenkel 66 das Aufnahmenest 92 und somit das Ende der Profilbahn 94 durch die federnde Anordnung auf eine geringere Breite, als das Fügeelement 7 ausgebildet ist. Daher ist bevorzugt der zuführende Luftstrom im Profilschlauch 94 nicht ausreichend stark, um das Fügeelement 7 gegen die Federkraft der kürzeren L-Schenkel 66 in das Aufnahmenest 92 zu drücken bzw. zu bewegen.

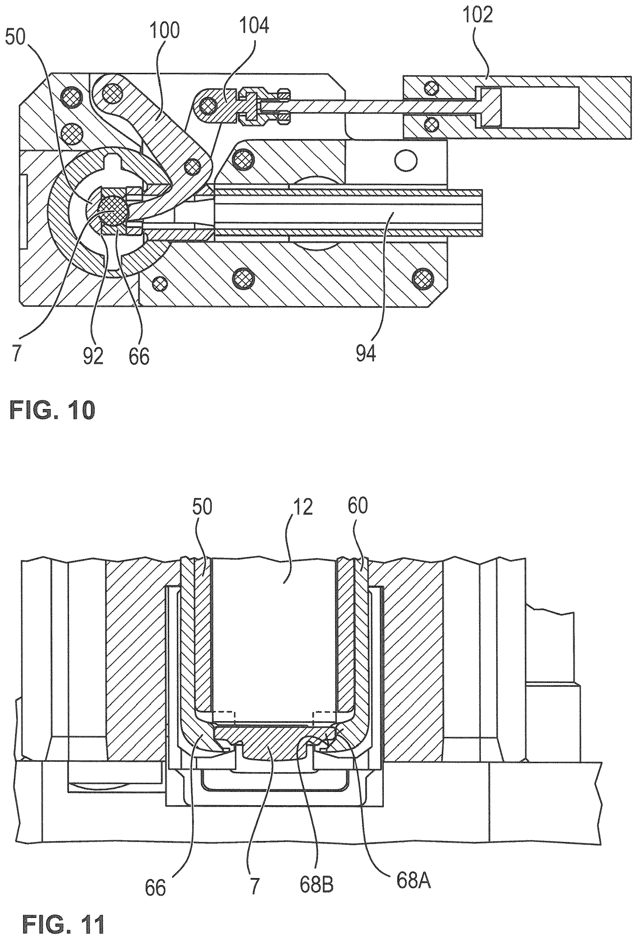

Aus diesem Grund ist erfindungsgemäß bevorzugt das Stellglied 100 vorgesehen, welches mechanisch oder elektromechanisch oder elektromagnetisch das Fügeelement 7 in das Aufnahmenest 92 versetzt. Dies ist in den Figuren 10 und 11 veranschaulicht, wo vorzugsweise ein Pneumatikzylinder 102 einen Kniehebelmechanismus 104 antreibt, um das Stellglied 100 zu bewegen. Über den bevorzugten Pneumatikzylinder 102 wird das Stellglied 100 soweit versetzt bzw. gedreht, dass das Fügeelement 7 vollständig in das Aufnahmenest 92 eingeschoben worden ist. Im Aufnahmenest 92 wird es dann von der Halte-Löse-Kontur 68 der kürzeren L-Schenkel 66 gehalten (siehe Figur 11).

Gemäß einer weiteren bevorzugten Ausgestaltung vorliegender Erfindung wird im Rahmen der Zufuhr des Fügeelements 7 durch das Stellglied 100 die Position des Stellglieds 100 überwacht. Es ist ebenfalls bevorzugt, die Position des Antriebs, vorzugsweise des Pneumatikzylinders 102, zu überwachen. Denn aus der Position des Stellglieds 100 und/oder der Position des Antriebs 102 lässt sich erkennen, ob das Fügeelement 7 vollständig in das Aufnahmenest 92 versetzt worden ist oder nicht.

Die erfasste Position des Stellglieds 100 oder die erfasste Position des Antriebs 102 lässt sich vorzugsweise auf folgende Situationen kalibrieren: Fährt das Stellglied 100 oder der Pneumatikzylinder 102 zu weit, ist kein Fügeelement 7 vorhanden, welches in das Aufnahmenest 92 versetzt werden könnte. Fährt das Stellglied 100 oder der Pneumatikzylinder 102 nicht weit genug, ist das Fügeelement 7 entweder nicht am korrekten Platz im Aufnahmenest 92 zwischen den L-Schenkeln 66 angekommen oder es befindet sich fälschlicherweise ein zweites Fügeelement 7 im Einschubbereich in das Aufnahmenest 92.

Nachdem das Fügeelement 7 dem Aufnahmenest 92 zugeführt worden ist (siehe Figur 10), wird das Stellglied 100 wieder in seine Ruheposition verfahren. Nun fährt der Setzkopf 1 in Richtung Bauteil 9 und der oben beschriebene Fügevorgang des Fügeelements 7 kann beginnen.

Entsprechend lässt sich das bevorzugte Fügeverfahren noch einmal folgendermaßen zusammenfassen. Zunächst wird in einem ersten Schritt S1 ein neues Fügeelement 7 über eine Elementzufuhr, insbesondere den Profilschlauch 94, in die Vorposition benachbart zum Aufnahmenest 92 zugeführt. Während dieses Schritts S1 blockiert der Stempel 10 oder der Adapterkolben 30 das Aufnahmenest 92. Es ist ebenfalls bevorzugt, dass Fügeelement 7 der Vorposition vor dem Aufnahmenest 92 zuzuführen, wenn das Aufnahmenest 92 nicht mehr blockiert ist.

Nachdem der Stempel 10 in seine Ruheposition versetzt worden ist, wird das Fügeelement 7 in die Halteposition zwischen den Halteenden 66 der Haltearme 68 bewegt (S2). Da sich nun das Fügeelement 7 im Aufnahmenest 92 befindet, wird in einem nächsten Schritt S3 der Stempel aus der Ruheposition in Fügerichtung R bewegt. Während dieser Bewegung ist das Fügeelement 7 in der Halteposition im Aufnahmenest 92 der Stempelfläche 16 des Arbeitsendes 12 des Stempels 10 beabstandet vorgelagert. Aufgrund der oben genannten Bewegung des Stempels 10 erfolgt dann im Schritt S4 ein Aufsetzen des Fügeelements 7 oder der Aufnahmehülse 50 auf dem Bauteil 9. Danach wird der Stempel 10 im Durchgangskanal 52 relativ zur Aufnahmehülse 50 und gegen die Federvorspannung der Feder 80 zwischen dem Stempel 10 und der Aufnahmehülse 50 versetzt (Schritt S5). Danach erfolgt durch den Stempel 10 das Lösen des Fügeelements 7 aus der Halteposition im Aufnahmenest 92 zwischen den Halteenden 66 mithilfe des Arbeitsendes 16 des Stempels 10 im Schritt S6. Durch die weitere Bewegung des Stempels 10 in Fügerichtung wird dann das Fügeelement 7 in das Bauteil 9 gefügt (Schritt S7). Abschließend wird der Stempel 10 aus seiner Arbeitsposition zum Fügen des Fügeelements 7 in die Ruheposition bewegt, wobei der Stempel 10 unterstützt durch die Federvorspannung zwischen dem Stempel 10 und der Aufnahmehülse 50 formschlüssig begrenzt aus dem Durchgangskanal 52 entfernt wird (Schritt S8).

### Bezugszeichenliste

- 1: Setzkopf
- 3: Teleskopeinheit
- 5: Oberholm einer Presse
- 7: Schweißhilfsfügeteil
- 9: Bauteil
- 10: Stempel
- 12: Arbeitsende des Stempels
- 14: Schulter
- 16: Stempelfläche
- 18: Axialnut, Vertiefung
- 30: Adapterkolben
- 50: Aufnahmehülse
- 52: Durchgangskanal
- 54: Austrittsöffnung
- 56: Kugel, Vorsprung
- 58: Aussparung in der Aufnahmehülse
- 60: Haltearme
- 62: stempelzugewandtes Ende
- 64: Befestigungsstruktur
- 65: längerer L-Schenkel
- 66: kürzerer L-Schenkel
- 68: Halte-Löse-Kontur
- 68A: Haltefläche
- 68B: Lösefläche
- 80: Feder
- 90: Profilbahn
- 92: Aufnahmenest
- 94: Profilschlauch
- 100: Stellglied
- 102: Antrieb
- 104: Kniehebelmechanismus

## Patentansprüche

1. Ein Setzkopf (1) für eine Fügevorrichtung, insbesondere eine Presse oder ein Setzgerät, der die folgenden Merkmale aufweist:
a. einen in Längsrichtung bewegbaren Stempel (10), sodass über eine an einem Arbeitsende (12) des Stempels (10) angeordnete Stempelfläche (16) ein Fügeelement (7) in ein Bauteil (9) fügbar ist,
b. eine Aufnahmehülse (50) mit einem Durchgangskanal (52), die mit dem Stempel (10) in dem Durchgangskanal (52) benachbart zu dem Arbeitsende (12) des Stempels (10) konzentrisch und axial bewegbar auf diesem geführt ist, und
c. zwei einander gegenüberliegend und außerhalb des Durchgangskanals (52) an der Aufnahmehülse (50) angeordnete Haltearme (60) stellen jeweils mindestens ein lateral einwärts ragendes Halteende (66) bereit, sodass mit den mindestens zwei Halteenden (66) das Fügeelement (7) benachbart zu einer stempelabgewandten Austrittsöffnung (54) des Durchgangskanals (52) und durch das axial bewegbare Arbeitsende (12) des Stempels (10) lösbar positionierbar ist, wobei
d. die Aufnahmehülse (50) relativ zum Stempel (10) federvorgespannt und begrenzt in Längsrichtung des Stempels (10) bewegbar ist, sodass in einer Ruheposition des Stempels (10) das Arbeitsende (12) innerhalb des Durchgangskanals (52) und entfernt von der Austrittsöffnung (54) und in einer Arbeitsposition benachbart zu der Austrittsöffnung (54) angeordnet ist, und
e. die Aufnahmehülse (50) und der Stempel (10) formschlüssig aneinander geführt sind, sodass die Aufnahmehülse (50) drehungsfrei relativ zum Stempel (10) axial versetzbar ist, **dadurch gekennzeichnet, dass**
f. die Haltearme (60) L-förmig vorgesehen sind und ein kürzerer L-Schenkel (66) lateral einwärts mit einer Halte-Löse-Kontur (68) für das Fügeelement (7) in den Durchgangskanal (52) der Aufnahmehülse (50) ragt, wobei die Halte-Löse-Kontur (68) zumindest einen formschlüssigen Halt (68A) für das Fügeelement (7) sowie eine geneigte Lösefläche (68B) spitzwinklig angeordnet zur Fügerichtung R zum stempelseitigen Freigeben des Fügeelements (7) aus der Halte-Löse-Kontur (68) aufweist.

2. Der Setzkopf (1) gemäß Patentanspruch 1, in dem ein längerer L-Schenkel (65) des L-förmigen Haltearms (60) eine Befestigungsstruktur (64) bereitstellt, mit der der L-förmige Schenkel (60) austauschbar an der Aufnahmehülse (50) befestigbar ist.

3. Der Setzkopf (1) gemäß einem der vorhergehenden Patentansprüche, in dem die Aufnahmehülse (50) benachbart zur Austrittsöffnung (54) des Durchgangskanals (50) eine einseitig offene Profilbahn (90) aufweist, die zumindest abschnittsweise an gegenüberliegenden Seiten durch die Halteenden (66) gebildet wird und mit der das Fügeelement (7) einer Fügeposition in Fügerichtung R unter der Stempelfläche (16) des Stempels (10) zuführbar ist.

4. Der Setzkopf (1) gemäß einem der vorhergehenden Patentansprüche, in dem die Halteenden (66) lateral in den Durchgangskanal (52) über die Halterarme (60) elastisch federvorgespannt sind.

5. Der Setzkopf (1) gemäß Patentanspruch 3, in dem die einseitig offene Profilbahn (90) in Kombination mit den federvorgespannten Halteenden (66) ein Aufnahmenest (92) für ein Fügeelement (7) bildet, in welches das Fügeelement (7) über ein mechanisches Stellglied (100) versetzbar ist.

6. Der Setzkopf (1) gemäß Patentanspruch 5, in dem eine Bewegung des Stellglieds (100) positionsüberwacht ist, sodass eine Positionierung des Fügeelements (7) im oder außerhalb des Aufnahmenests (92) bestimmbar ist.

7. Eine Blechpresse mit einem Setzkopf (1) gemäß einem der vorhergehenden Patentansprüche.

8. Ein Setzgerät mit einem Setzkopf (1) gemäß einem der vorhergehenden Patentansprüche 1 bis 6.

9. Ein Fügeverfahren eines Fügeelements (7), insbesondere ein Schweißhilfsfügeteil, mit einem Setzkopf (1) gemäß einem der vorhergehenden Patentansprüche 1 bis 6, welches die folgenden Schritte aufweist:
a. mit dem Stempel (10) in einer Ruheposition Versetzen eines Fügeelements (7) in eine Halteposition zwischen den Halteenden (66) der Haltearme (S2),
b. Bewegen des Stempels (10) aus der Ruheposition in eine Fügerichtung R, wobei das Fügeelement (7) in der Halteposition der Stempelfläche (16) des Arbeitsendes (12) des Stempels (10) beabstandet vorgelagert ist (S3),
c. Aufsetzen des Fügeelements (7) oder der Aufnahmehülse (50) auf einem Bauteil (9) (S4), danach
d. Versetzen des Stempels (10) im Durchgangskanal (52) relativ zur Aufnahmehülse (50) und gegen die Federvorspannung zwischen dem Stempel (10) und der Aufnahmehülse (50) (S5),
e. Lösen des Fügeelements (7) aus der Halteposition zwischen den Halteenden (68) mit dem Arbeitsende (12) des Stempels (10) (S6) und Fügen des Fügeelements (7) in das Bauteil (9) (S7).

10. Das Fügeverfahren gemäß Patentanspruch 9, in welchem das Fügeelement (7) durch ein Stellglied (100) in die Halteposition versetzt wird.

11. Das Fügeverfahren gemäß Patentanspruch 9 oder 10 mit dem weiteren Schritt:
Zuführen eines neuen Fügeelements (7) über eine Elementzufuhr (94), insbesondere ein Profilschlauch, in eine Vorposition benachbart zum Aufnahmenest (92), während der Stempel (10) oder der Adapterkolben (30) das Aufnahmenest (92) blockiert (S1) oder während das Aufnahmenest (92) frei zugänglich ist.

12. Das Fügeverfahren gemäß einem der Patentansprüche 9 bis 11 mit dem weiteren Schritt:
Bewegen des Stempels (10) aus einer Arbeitsposition zum Fügen des Fügeelements (7) in die Ruheposition, wobei der Stempel (10) unterstützt durch die Federvorspannung zwischen dem Stempel (10) und der Aufnahmehülse (50) formschlüssig begrenzt zumindest teilweise aus dem Durchgangskanal (52), vorzugsweise von einer Austrittsöffnung (54) des Durchgangskanals (52) der Aufnahmehülse (50), entfernt wird (S8).

## Claims

1. A setting head (1) for a joining device, in particular a press or a setting device, having the following features:
a. a punch (10) movable in longitudinal direction, so that a joining element (7) is joinable into a component (9) by a punch surface (16) arranged at a working end (12) of the punch (10),
b. a receiving sleeve (50) with a passage channel (52), the sleeve being concentrically and axially movable with the punch (10) in the passage channel (52) adjacent to the working end (12) of the punch (10) on the same, and
c. two holding arms being arranged opposite to each other and outside of the passage channel (52) at the receiving sleeve (50) each provide at least one laterally inwardly protruding holding end (66), so that with the at least two holding ends (66), the joining element (7) is positionable adjacent to an exit opening (54), facing away from the punch (10), of the passage channel (52) and is releasable by the axially movable working end (12) of the punch (10), wherein
d. in which the receiving sleeve (50) is spring-pretensioned relative to the punch (10) and movable limitedly in the longitudinal direction of the punch (10), so that in a rest position of the punch (10), the working end (12) is arranged within the passage channel (52) and removed from the exit opening (54) and in an operating position of the punch adjacent to the exit opening (54), and
e. in which the receiving sleeve (50) and the punch (10) are guided in a form-fit manner next to each other, so that the receiving sleeve (50) is axially displaceable in a rotation-free manner relative to the punch (10), **characterized in that**
f. the holding arms (60) are provided L-shaped and a shorter L-leg (66) projects laterally inwardly with a holding-releasing contour (68) for the joining element (7) into the passage channel (52) of the receiving sleeve (50) wherein the holding-releasing contour (68) includes at least a form-fit hold (68A) for the joining element (7) as well as an inclined releasing surface (68B) arranged at a acute angle with respect to the joining direction R for the punch-sided releasing of the joining element (7) from the holding releasing contour (68).

2. The setting head (1) according to claim 1, in which a longer L-leg (65) of the L-shaped holding arm (60) provides a fastening structure (64) with which the L-shaped leg (60) is fixable interchangeably at the receiving sleeve (50).

3. The setting head (1) according to one of the preceding claims, in which adjacent to the exit opening (54) of the passage channel (50), the receiving sleeve (50) includes a profile track (90) open at one side, the track (90) being formed at least in sections at opposite sides by the holding ends (66) and with which the joining element (7) is deliverable to a joining position in the joining direction R under the punch surface (16) of the punch (10).

4. The setting head (1) according to one of the preceding claims, in which the holding ends (66) are elastically spring-pretensioned laterally into the passage channel (52) by means of the holding arms (60).

5. The setting head (1) according to claim 3, in which the profile track (90), which is open at one side, in combination with the spring-pretensioned holding ends (66), forms a receiving nest (92) for a joining element (7), into which the joining element (7) is displaceable by means of a mechanical actuator (100).

6. The setting head (1) according to claim 5, in which a movement of the actuator (100) is carried out with its position being monitored, so that a positioning of the joining element (7) inside or outside of the receiving nest (92) is determinable.

7. A metal sheet press with a setting head (1) according to one of the preceding claims.

8. A setting device with a setting head (1) according to one of the preceding claims 1 to 6.

9. A joining method of a joining element (7), in particular a welding auxiliary joining part, with a setting head (1) according to one of the preceding claims 1 to 6, having the following steps:
a. with the punch (10) in a rest position, displacing a joining element (7) into a holding position between the holding ends (66) of the holding arms (S2),
b. moving the punch (10) from the rest position in a joining direction R, wherein in the holding position, the joining element (7) is positioned upstream at a distance to the punch surface (16) of the working end (12) of the punch (10) (S3),
c. placing the joining element (7) or the receiving sleeve (50) on a component (9) (S4), after that,
d. displacing the punch (10) in the passage channel (52) relative to the receiving sleeve (50) and against the spring pre-tensioning between the punch (10) and the receiving sleeve (50) (S5),
e. releasing the joining element (7) from the holding position between the holding ends (68) with the working end (12) of the punch (10) (S6) and joining the joining element (7) into the component (9) (S7).

10. The joining method according to claim 9, in which the joining element (7) is displaced into the holding position by means of an actuator (100).

11. The joining method according to claim 9 or 10 with the further step:
delivering a new joining element (7) via an element delivery (94), in particular a profile hose, into a pre-position adjacent to the receiving nest (92), while the punch (10) or the adapter piston (30) blocks the receiving nest (92) (S1) or while the receiving nest (92) is freely accessible.

12. The joining method according to one of the claims 9 to 11 with the further step:
moving the punch (10) from an operating position for joining the joining element (7) into the rest position, wherein the punch (10), supported by the spring pre-tensioning between the punch (10) and the receiving sleeve (50) is removed form-fit in a limited manner at least partly from the passage channel (52), preferably from an exit opening (54) of the passage channel (52) of the receiving sleeve (50) (S8).

## Revendications

1. Tête de pose (1) pour un appareil d'assemblage, en particulier une presse ou un dispositif de pose, présentant les caractéristiques suivantes :
a. un poinçon (10) déplaçable dans le sens longitudinal, de sorte qu'un élément d'assemblage (7) peut être inséré dans un composant (9) par le biais d'une surface de poinçon (16) disposée à une extrémité de travail (12) du poinçon (10),
b. une douille de logement (50) avec un canal de passage (52), laquelle est guidée avec le poinçon (10) dans le canal de passage (52) à proximité de l'extrémité de travail (12) du poinçon (10), de façon concentrique et déplaçable axialement sur celui-ci, et
c. deux bras de maintien (60) disposés de façon opposée l'un par rapport à l'autre et à l'extérieur du canal de passage (52) sur la douille de logement (50) fournissent respectivement au moins une extrémité de maintien (66) faisant saillie latéralement vers l'intérieur, de sorte que les deux extrémités de maintien (66) permettent de positionner l'élément d'assemblage (7) de façon détachable à proximité d'une ouverture de sortie (54) du canal de passage (52) opposée au poinçon et à travers l'extrémité de travail (12) déplaçable axialement du poinçon (10), dans laquelle
d. la douille de logement (50) est précontrainte par ressort par rapport au poinçon (10) et déplaçable de façon limitée dans le sens longitudinal du poinçon (10), de sorte que l'extrémité de travail (12) est disposée à l'intérieur du canal de passage (52) et à distance de l'ouverture de sortie (54) dans une position de repos du poinçon (10), et à proximité de l'ouverture de sortie (54) dans une position de travail, et
e. la douille de logement (50) et le poinçon (10) sont guidés l'un sur l'autre par engagement positif, de telle façon que la douille de logement (50) peut être décalée axialement sans rotation par rapport au poinçon (10), **caractérisée en ce que**
f. les bras de maintien (60) sont conçus en forme de L et une branche de L plus courte (66) fait saillie latéralement vers l'intérieur dans le canal de passage (52) de la douille de logement (50) avec un contour de maintien-détachement (68) pour l'élément d'assemblage (7), dans laquelle le contour de maintien-détachement (68) présente au moins un maintien à engagement positif (68A) pour l'élément d'assemblage (7) ainsi qu'une surface de détachement inclinée (68B) disposée en angle droit par rapport à la direction d'assemblage R pour la libération de l'élément d'assemblage (7) côté poinçon hors du contour de maintien-détachement (68).

2. Tête de pose (1) selon la revendication 1, dans laquelle une branche de L plus longue (65) du bras de maintien en forme de L (60) fournit une structure de fixation (64) permettant de fixer la branche en forme de L (60) de façon amovible sur la douille de logement (50).

3. Tête de pose (1) selon l'une des revendications précédentes, dans laquelle la douille de logement (50) présente une voie profilée ouverte unilatéralement (90) à proximité de l'ouverture de sortie (54) du canal de passage (52), laquelle est formée au moins par endroits sur des côtés opposés par les extrémités de maintien (66) et avec laquelle l'élément d'assemblage (7) peut être guidé vers une position d'assemblage dans la direction d'assemblage R sous la surface de poinçon (16) du poinçon (10).

4. Tête de pose (1) selon l'une des revendications précédentes, dans laquelle les extrémités de maintien (66) sont précontraintes élastiquement par ressort latéralement dans le canal de passage (52) par le biais des bras de maintien (60).

5. Tête de pose (1) selon la revendication 3, dans laquelle la voie profilée ouverte unilatéralement (90) forme un nid de logement (92) pour un élément d'assemblage (7), en combinaison avec les extrémités de maintien (66) précontraintes par ressort, dans lequel l'élément d'assemblage (7) peut être décalé par le biais d'un organe de réglage mécanique (100).

6. Tête de pose (1) selon la revendication 5, dans laquelle un déplacement de l'organe de réglage (100) est contrôlé en position, de telle façon qu'un positionnement de l'élément d'assemblage (7) dans le nid de logement (92) ou à l'extérieur de celui-ci peut être déterminé.

7. Presse pour tôle dotée d'une tête de pose (1) selon l'une des revendications précédentes.

8. Dispositif de pose doté d'une tête de pose (1) selon l'une des revendications précédentes 1 à 6.

9. Procédé d'assemblage d'un élément d'assemblage (7), en particulier une pièce d'assemblage d'aide au soudage, avec une tête de pose (1) selon l'une des revendications précédentes 1 à 6, présentant les étapes suivantes :
a. avec le poinçon (10) dans une position de repos, décalage d'un élément d'assemblage (7) vers une position de maintien entre les extrémités de maintien (66) des bras de maintien (S2),
b. déplacement du poinçon (10) hors de la position de repos dans une direction d'assemblage R, dans lequel l'élément d'assemblage (7) est placé en amont à distance de la surface de poinçon (16) de l'extrémité de travail (12) du poinçon (10) dans la position de maintien (S3),
c. pose de l'élément d'assemblage (7) ou de la douille de logement (50) sur un composant (9) (S4), puis
d. décalage du poinçon (10) dans le canal de passage (52) par rapport à la douille de logement (50) et contre la précontrainte par ressort entre le poinçon (10) et la douille de réception (50) (S5),
e. détachement de l'élément d'assemblage (7) par rapport à la position de maintien entre les extrémités de maintien (68) à l'aide de l'extrémité de travail (12) du poinçon (10) (S6), et insertion de l'élément d'assemblage (7) dans le composant (9) (S7).

10. Procédé d'assemblage selon la revendication 9, dans lequel l'élément d'assemblage (7) est décalé vers la position de maintien par un organe de réglage (100).

11. Procédé d'assemblage selon la revendication 9 ou 10, comprenant l'étape supplémentaire suivante :
acheminement d'un nouvel élément d'assemblage (7) par le biais d'un moyen d'acheminement (94), en particulier un tube profilé, vers une position initiale à proximité du nid de logement (92), pendant que le poinçon (10) ou le piston d'adaptateur (30) bloque le nid de logement (92) (S1) ou pendant que le nid de logement (92) est accessible librement.

12. Procédé d'assemblage selon l'une des revendications 9 à 11, comprenant l'étape supplémentaire suivante :
déplacement du poinçon (10) hors d'une position de travail pour l'assemblage de l'élément d'assemblage (7) vers la position de repos, dans lequel le poinçon (10) est éloigné au moins partiellement hors du canal de passage (52), de préférence à distance d'une ouverture de sortie (54) du canal de passage (52) de la douille de logement (50), de façon limitée par engagement positif, soutenu par la précontrainte par ressort entre le poinçon (10) et la douille de logement (50) (S8).
